# EUROPEAN PATENT APPLICATION

(11) **EP 2 355 511 A1**
(43) Date of publication of application: **10.08.2011**
(21) Application number: 09290986.0
(22) Date of filing: 21.12.2009
(51) Int. Cl.: H04N 7/26, H04N 7/24, H04N 7/50

(54) **Method and arrangement for jointly encoding a plurality of video streams**

(71) Applicant: Alcatel Lucent, 75008 Paris (FR)
(72) Inventor: Macq, Jean-François, 1083 Ganshoren (BE)
(74) Representative: Vandenbroeck, Josiane Anne Marie

(57) **Abstract**

A method for jointly encoding a plurality of video streams (IV1, IV2, IV3), includes the steps of
- receiving said plurality of video streams (IV1, IV2, IV3)
- constructing a plurality of sequences of predicted pixel blocks (PPB1,PPB2, PPB3),
- processing and entropy encoding said predicted pixel blocks (PPB1,PPB2, PPB3) of said plurality of sequences of predicted pixel blocks with corresponding blocks of said plurality of video streams (IV1, IV2,IV3) for generating a plurality of sequences of encoded residual pixel data (ERPD1, ERPD2, ERPD3),
wherein said plurality of sequences of predicted pixel blocks (PPB1, PPB2, PPB3) are constructed from encoding structure data (ESD, ESD1, JESD) generated from said plurality of video streams (IV1, IV2, IV3), and wherein said plurality of sequences of encoded residual pixel data (ERPD1, ERPD2, ERPD3) is provided together with reference data (IREF) comprising said encoding structure data (ESD, ESD1, JESD) as encoded data of said plurality of video streams.

A method for decoding and an encoder and decoder are disclosed as well.

## Description

The present invention relates to a method for jointly encoding a plurality of input video streams.

In several applications, several video streams need to be simultaneously compressed before transmission or storage. One obvious solution is to encode each stream independently. This is generally very processing power consuming, as most existing encoders follow more or less the same reference architecture where the bulk of the processing comprises computing encoding related syntax elements. Most traditional encoders further construct a sequence of predicted pixel blocks, from the received input video data and from these calculated encoding related syntax elements. These predicted pixel blocks are then processed, generally involving a step of subtracting them from corresponding blocks of the input video stream or vice versa, to thereby obtain a sequence of residual pixel blocks. The processing further involves transforming this sequence of residual pixel blocks, with subsequent quantizing and entropy encoding in combination with the encoding related syntax elements to obtain a traditional encoded video stream.

Although such encoding methods are now widespread, they still require a lot of processing power since an encoder needs to compute the encoding related syntax elements for each input stream. This requires a lot of processing effort. Especially when several input streams are to be jointly encoded, this processing effort is then to be multiplied by the number of input streams to be encoded.

On the other hand, alternative coding mechanisms have been developed such as to jointly encode all the input streams together with the objective of maximizing the compression efficiency of the whole set of input streams. As an example, a "Multiview Video Coding", hereafter abbreviated by MVC, extension was recently standardized as the Annex H of the H.264/AVC video coding standard. The aim of MVC is to offer good compression performance to jointly encode a set of input video streams by exploiting the similarities between those video streams. As its name suggest, one potential application is to encode several views of a given scene obtained by several cameras. The shorter the distance between these cameras, the better compression will be obtained using MVC for jointly compressing the multiple views. A drawback of the MVC approach however is that it creates strong coding interdependencies between the coded streams. This especially presents drawbacks at the decoder side as in order to decode one video stream of the plurality of the encoded streams, all the data from all other views required by an inter-view prediction step need to be decoded as well. Similarly, if one wants to display a given video stream, the decoder has to decode all the encoded streams on which the displayed stream depends, according to this MVC encoding method.

It is therefore an object of the present invention to describe an alternative encoding and decoding method for encoding a plurality of video streams, which requires less processing power both at the encoder and decoder side.

According to the invention this object is achieved by providing a method for encoding a plurality of video streams, said method comprising the steps of receiving said plurality of video streams , constructing a plurality of sequences of predicted pixel blocks, processing and entropy encoding said predicted pixel blocks of said plurality of sequences of predicted pixel blocks with corresponding blocks of said plurality of video streams for generating a plurality of sequences of encoded residual pixel data, wherein said plurality of sequences of predicted pixel blocks are constructed from encoding structure data generated from said plurality of video streams, and wherein said plurality of sequences of encoded residual pixel data is provided together with reference data comprising said encoding structure data as encoded data of said plurality of video streams.

In this way, a plurality of sequences of encoded residual pixel data streams will be generated together with reference data comprising encoding structure data. This makes the joint encoding process itself much easier as the encoding structure data only have to be determined once in stead of for each individual stream of the plurality.

In an embodiment said processing and entropy encoding comprises generating a plurality of sequences of residual pixel blocks from the difference between predicted pixel blocks of said plurality of sequences of predicted pixel blocks and corresponding blocks of said plurality of video streams, to transform, quantize and entropy encode said residual pixel blocks of said respective sequences to thereby obtain said plurality of sequences of encoded residual pixel data.

In another embodiment said encoding structure data is further entropy encoded to provide encoded encoding structure data as said reference data.

The encoding structure data can be generated from an intermediate stream derived from at least one video stream from said plurality.

This intermediate stream may be obtained e.g. by averaging at least two video streams of said plurality, but it can also be a selection of one of the streams of the plurality.

The encoding structure data can also be generated from at least two video streams of said plurality by analyzing encoding decisions for said at least two video streams and selecting a single prediction choice for being comprised in said encoding structure data.

In an embodiment said analysis is based upon comparing said encoding decisions with respect to a predetermined optimization criterion.

The present invention relates as well to a method for decoding at least one encoded video stream comprising at least one sequence of encoded residual pixel data and reference data comprising input encoding structure data, said method including a step of receiving a plurality of sequences of encoded residual pixel data and of said reference data comprising said input encoding structure data, a step of selecting at least one sequence of encoded residual pixel data pertaining to said at least one encoded video stream and said reference data comprising said encoding structure data, to entropy decode and process said at least one sequence of encoded residual pixel data pertaining to said at least one encoded video stream with said encoding structure data to provide at least one sequence of decoded pixel blocks as at least one decoded video stream.

In this way a decoder receiving such a plurality of encoded residual pixel blocks together with a reference stream comprising encoding structure data, only has to select the reference stream and the appropriate sequence of encoded residual pixel data pertaining to the video to be decoded. The decoding or reconstruction can be done rather easily by performing the steps of entropy decoding and processing involving e.g. prediction construction to finally come to the decoded pixel blocks. In case several video streams need to be decoded, embodiments of the method even become more interesting as the encoding structure is the same for all the streams to be decoded and the processing involving e.g. the prediction construction may imply the application the same operations to the decoded residual pixel blocks parts of each stream. As these processing steps are the same for all the streams to be decoded, they can be efficiently executed in parallel implementations, using for instance the Single Instruction, Multiple Data , abbreviated by SIMD, approach. A much simpler decoder for jointly decoding several encoded streams is thereby obtained since the same encoding structure is shared by all streams and the prediction construction can be efficiently implemented in a joint parallel process.

In an embodiment said at least one sequence of encoded residual pixel data pertaining to said at least one encoded video stream is submitted to an inverse quantization and an inverse transformation to thereby obtain at least one sequence of decoded residual pixel blocks, wherein at least one prediction of pixel blocks is constructed from said encoding structure data and from buffered pixel blocks for combination with said at least one decoded residual pixel blocks to thereby obtain said at least one sequence of decoded pixel blocks .

In another variant said encoding structure data is derived from said reference data by entropy decoding encoded encoding structure data extracted from said reference input data .

The present invention relates as well to an encoder and a decoder for performing the subject methods.

Further embodiments are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means. It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1a shows a basic scheme of an embodiment of a prior art encoder,
Fig. 1b shows a basic embodiment of a prior art MVC encoder,
Fig. 2a shows an end-to-end encoding and transmission scheme comprising a joint encoder, an intermediate node and individual or joint decoders,
Fig. 2b shows an overview of the coding interdependencies obtained using classical AVC and MVC prior art approaches, and the approach followed in embodiments according to the invention
Fig. 3a shows a first embodiment JE1 of a joint encoder according to the invention,
Fig 3b shows an embodiment of a single video encoder module E1 which is included in the first embodiment of the joint encoder JE1 of Fig. 3a,
Fig. 3c shows a second embodiment JE2 of a joint encoder according to the invention,
Fig. 3d shows an embodiment of another single video encoder module E2 which is included in the second embodiment of the joint encoder JE2 of Fig. 3c,
Fig. 4 shows a third embodiment JE3 of a joint encoder according to the invention,
Fig. 5a shows a fourth embodiment JE4 of a joint encoder according to the invention,
Fig. 5b shows details of a first embodiment JED1 of a " joint make encoding decisions" module JED of Fig. 5a,
Fig. 5c shows details of a second embodiment JED2 of a " joint make encoding decisions" module JED of Fig. 5a,
Fig. 6a shows a first embodiment of a decoder JD1 according to the invention , and
Fig. 6b shows a second embodiment of a decoder JD2 according to the invention.

It is to be remarked that the following merely illustrates the principles of the invention. It will thus be appreciated that those skilled in the art will be able to devise various arrangements that, although not explicitly described or shown herein, embody the principles of the invention .All examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is also to be understood that throughout this document the notation "input video stream" and output video stream" refer to input and output data which can have the form of real streaming video but can also related to (stored) data files, or any combination of these . The embodiments set out in this description therefore refer to both online and offline encoding of these video data and to any combination thereof.

In many applications, several video streams representing the same content, but not completely identical pixel-wise, need to be simultaneously compressed or encoded before transmission or storage. A typical example is a set of video streams obtained when capturing a scene with several cameras located close to each other, often also denoted as Multiview Video. For these applications, similarities usually arise for portions of the scene that correspond to objects that are lying at the largest distance from the camera. For those objects, the disparities between the different cameras are usually the smallest. This situation can also arise if one wants to simultaneously encode several variants of the same video content which slightly differ from each other, for instance because of different post-processing with respect to color values, illumination values, etc ...applied on these variants or because each version has been uniquely watermarked, etc...

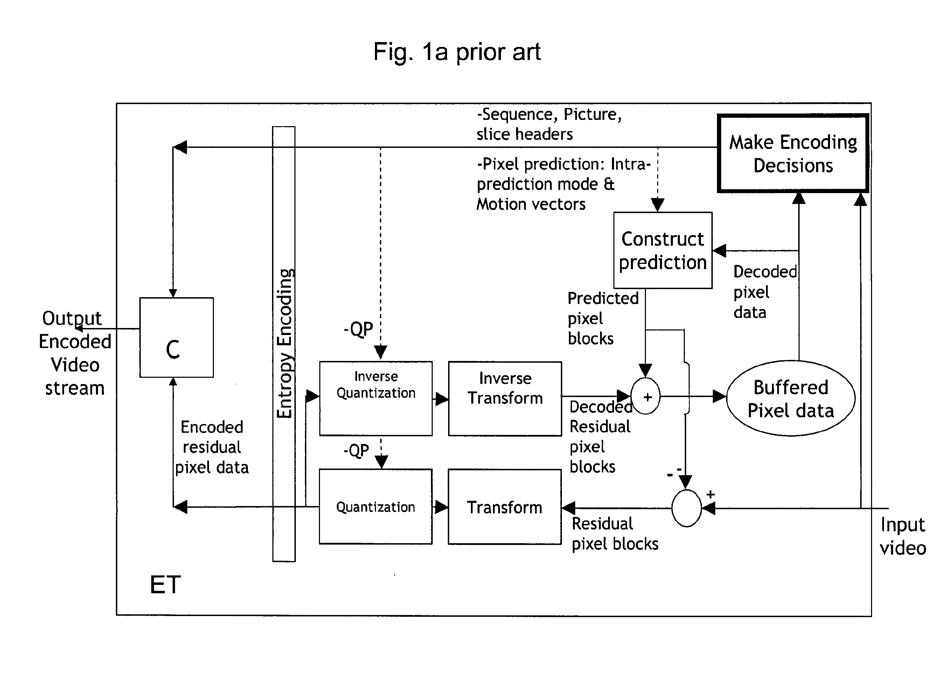

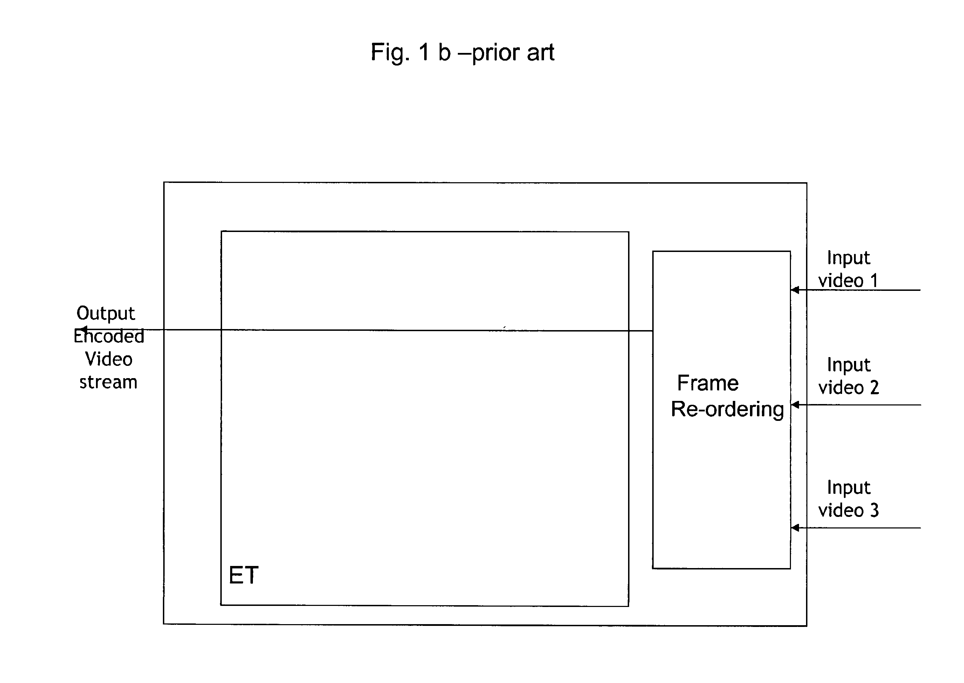

Prior art solutions either encode each of these input video streams separately and thereby use a standard encoder such as the one shown in Fig. 1a for each video stream to be encoded. This figure 1 a shows the main components of a typical video encoder ET. Although the encoding process itself is not standardized, most existing encoders follow the same reference architecture where the bulk of the processing involves computing encoding related syntax elements which provide the best compression under certain constraints, usually either in terms of bitrate or in terms of quality. These syntax elements are calculated from the input video stream to be encoded. Such an input video stream may comprise pixel video data such as the pixel color values, as well as some additional input data. The latter may include e.g. the frame size expressed in pixel width and height, the frame rate, the color space, the type of chroma sampling, etc. This input video stream is on one hand forwarded to a block adapted to make these encoding decisions and which thus generates these encoding related syntax elements, typically comprising data like the sequence and picture parameters sets, slice and macroblocks headers as well as all the information that will later explain to a decoder how to construct the intra- and inter-prediction of pixel data based on already decoded portions of the video. Using the H.264 coding standard as an example, the therein defined Category 2 syntax elements can be considered to correspond to such encoding related syntax elements, possibly together with some other syntax elements of so-called non-VCL NAL units such as Category 0, resp. 1, syntax elements for the sequence, resp. picture parameter sets.

To enable a better understanding of some embodiments described in this patent application a brief explanation of this H.264 coding standard with data partitioning feature will be given here below :
According to this H.264 standard each video frame is divided and encoded at the macroblock level, where each macroblock is a 16x16 block of pixels.

Macroblocks can be grouped together in slices to allow parallelization or error resilience. For each macroblock, the coded bitstream contains, firstly, data which signal to the decoder how to compute a prediction of that macroblock based on already decoded macroblocks and, secondly, residual data which are decoded and added to the prediction to re-construct the macroblock pixel values. Each macroblock is either encoded in "intra-prediction" mode in which the prediction of the macroblock is formed based on reconstructed macroblocks in the current slice, or "inter-prediction" mode in which the prediction of the macroblock is formed based on blocks of pixels in already decoded frames, called reference frames. The intra-prediction coding mode applies spatial prediction within the current slice in which the encoded macroblock is predicted from neighbouring samples in the current slice that have been previously encoded, decoded and reconstructed. A macroblock coded in intra-prediction mode is called an I-type macroblock. The inter-prediction coding mode is based on temporal prediction in which the encoded macroblock is predicted from samples in previous and/or future reference frames. A macroblock coded in inter-prediction mode can either be a P-type macroblock if each sub-block is predicted from a single reference frame, or a B-type macroblock if each sub-block is predicted from one or two reference frames.

The default H.264 behaviour is to group macroblocks in raster-scan order (i.e. scanning lines from left to right) into slices. The H.264 standard however further introduced another feature, referred to as flexible macroblock ordering, hereafter abbreviated with FMO. FMO partitions a video frame into multiple slice groups, where each slice group contains a set of macroblocks which could potentially be in nonconsecutive positions and could be anywhere in a frame.

For transport each slice can be transported within one network abstraction layer, hereafter abbreviated by NAL, unit, using default mode. However the H.264/AVC standard further describes an additional feature of data partitioning of each slice over several NAL units, to improve the error resilience during the transport of the slice.

According to this feature of data partitioning of one slice over several Partitions, the encoded contents of one slice will be distributed over 3 NAL units: a NAL unit partition A, a NAL unit partition B, and a NAL unit partition C. According to the standard, the NAL unit partition A will contain Category 2 syntax elements of that slice, representing all slice-related syntax elements that are not residual data. These category 2 syntax elements comprise slice header and header data for each macro block within a slice, including intra-prediction mode, resp. motion vectors, for intra-coded, resp. inter-coded, macroblocks, etc. The NAL unit partition B will contain the Category 3 syntax elements, that is the intracoded residual data of the macroblocks of the slice under consideration, if intra prediction coding was used, and the NAL unit partition C will contain the Category 4 syntax elements, that is the intercoded residual data, if this type of coding was used.

Returning to fig. 1a, the input video is also forwarded to several modules which together are adapted to process the predicted pixel blocks together with corresponding blocks of the input video streams. In the embodiment of Fig. 1 a first module is adapted to subtract the predicted pixel blocks as provided by a prediction construction block, from corresponding pixel blocks from the input video, or vice versa. The resulting residual pixel blocks are then further transformed and quantized. In other embodiments they can undergo a filtering operation. The resulting residual pixel data in H.264 correspond to Category 3 and 4 syntax elements. They will undergo a combined entropy encoding together with the related syntax elements such as the category 2 syntax elements in H.264. Note that the combined entropy encoding can be performed by a first entropy encoding , followed by a combination step, such as shown in Fig. 1a, or can be performed the way around, thus by first combining the data before entropy encoding them. "Entropy Encoding" is to be understood as comprising the set of operations applied to compress syntax elements, including the predictive coding of e.g. the intra-prediction mode or motion vectors, as well as the variable length coding (Exp-Golomb, CAVLC) or arithmetic coding (CABAC) steps as specified in the standard.

In most traditional encoders the computation of the block transform and quantization is performed in the forward but, usually, also a feedback step in the reverse direction is present. These feedback steps are usually added to make sure that the encoder uses the same sets of decoded frames as the decoder to make the predictions. Such encoders are called "closed-loop" encoders, as opposed to "open-loop" encoders, where these feedback steps are not present. On the other hand the main differentiator between encoders lies in the way they define the encoding related syntax elements implying making a choice of type of frame, slicing, intra. vs inter-prediction, choice of intra-prediction mode and computation of motion vectors. These steps are thus generally performed within the block "make encoding decisions" and usually add significant additional complexity in the encoder with respect to a decoder.

As explained above, encoding of a plurality of video streams can be achieved by separately encoding these individual video streams using such a state-of-the-art encoder for each video sequence to be encoded. This however requires a lot of processing effort.

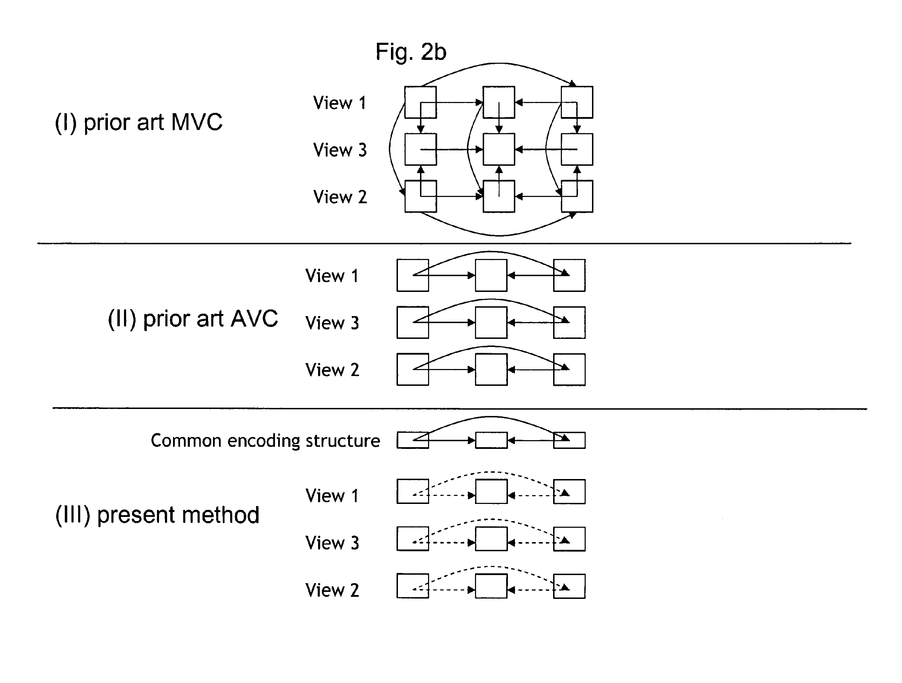

As an alternative MVC encoding was introduced to improve the compression, and is a proposed extension of the present H.264/AVC standard. As shown schematically in Fig 1b, an MVC encoder can be implemented by reusing the same components as these that are present in a regular H.264/AVC encoder ET such as the one of Fig. 1a. With MVC the whole set of video frames from the multiple input video is considered as a single sequence of video frames, and a step of frame re-ordering precedes a regular H.264/AVC encoding. This MVC method to jointly encode the multiple inputs thereby creates coding interdependencies. This can be understood by means of the following example where a video scene is captured with 3 cameras that generate respective video streams View-1, View-2 and View-3. In order to efficiently compress or encode the 3 views jointly, a typical MVC coding structure will encode View-1 as a regular (single) video stream using standard H.264/AVC inter-frame prediction mechanisms, will encode View-2 using predicted pixel blocks from View-1 in combination with standard inter-frame prediction within View-2 and encode View-3 using prediction from View-1 and View-2, in combination with standard inter-frame prediction within View-3,as illustrated in Figure 2b (I) where each arrow comes out of a frame used as a reference and points to a frame that uses that reference frame for inter-frame prediction. Therefore to decode View-2, data relative to View-1 and View-2 must be transmitted to the decoder. To decode View-3, data relative to View-1, View-2 and View-3 need to be transmitted to the decoder. Therefore, the data and the processing resources required to display a single view or video stream might differ greatly depending on which view is requested.

Thus while MVC can improve the compression efficiency, it still has drawbacks of being computationally very intensive.

Fig. 2b (II) shows the interdependencies for the separately encoding of the views using regular H.264/AVC encoders. In this case the 3 encoded views do not show coding interdependencies, but, as mentioned before, the drawback is that each view has to be compressed separately, resulting in high computational effort.

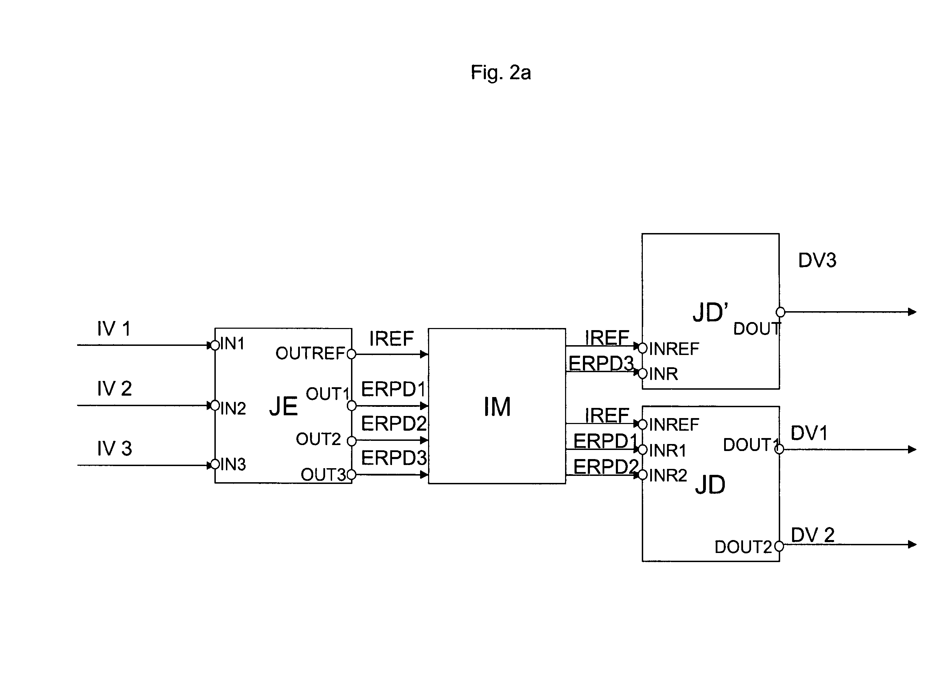

These drawbacks of the prior art methods are overcome by embodiments of joint encoders and decoders according to this invention. A high level scheme of such a joint encoder JE coupled via an optional intermediate node IM to several decoders JD and JD' is shown in Fig. 2a. In this embodiment 3 video input streams IV1 to IV3 are provided to a joint encoder JE. This is adapted to extract from them common encoding structure data. This can be optionally entropy encoded and provided as either encoded or non-encoded encoding structure data, being comprised in reference data IREF which is provided to a reference output denoted OUTREF of this joint encoder JE. The joint encoder JE is further adapted to also determine sequences of encoded residual pixel data for each of the input video streams. These sequences of encoded residual pixel data are respectively denoted ERPD1 for IV1, ERPD2 for IV2 and ERPD3 for IV3. In this embodiment these data are also provided as separate output streams or data on respective output terminals OUT1, OUT2 and OUT3. However in other embodiments these respective output data can be delivered in a multiplexed or time-shared way such that they can be provided on only one output terminal. In that case the optional intermediate node has to extract them and forward the appropriate ones to the correct destination , possibly again combined into one stream. The process of extracting data and further encapsulating and retransmitting data as performed in such an intermediate node is well known to a person skilled in the art and will thus not be further discussed.

The intermediate node IM is thus further adapted to identify and extract the appropriate data, for further forwarding to their destination. This can be performed by filtering the plurality of encoded residual data streams and encapsulation of the needed video data to a transport stream for further transmission to their final destination , being the two decoders JD and JD's in Fig. 2a. In this Fig. 2s the decoder JD' only needs to receive the encoded data of the third video IV3, therefore the intermediate node IM will extract only the reference data with the encoded residual pixel data ERPD3 pertaining to this view, and provide this together with the common reference data IREF to the decoder JD'. This decoder can decode the third video stream based on these input data . The decoded video stream is denoted DV3 and is provided on an output terminal DOUT.

The decoder JD is adapted to receive the encoded data of the first and second video stream, and the intermediate node will accordingly provide the encoded residual pixel data ERPD1, resp. ERPD2 of IV1, resp. IV2, together with the reference encoding structure data IREF. In this decoder JD all this information will be used for decoding such as to obtain the correctly decoded video data with the aim of reconstructing as good as possible the original video streams IV1 and IV2. The decoding streams are denoted DV1 and DV2 and are provided on respective output terminals DOUT1 and DOUT2. It is to be remarked that in case the intermediate node is not present, all encoded residual pixel data can be directly transmitted and provided to a decoder. Such a decoder is then adapted to extract from the input data, the reference encoding structure data as well as the encoded residual pixel data pertaining to the video that has to be decoded. The decoding or reconstruction can be done rather easily by performing the steps of entropy decoding and processing usually involving a prediction construction to finally come to the decoded pixel blocks. As the encoding structure is the same for all the streams to be decoded, the prediction construction consists in applying the same operations to the already decoded parts of each stream. As these processing steps are the same for all the streams to be decoded, they can be efficiently executed in parallel implementations, using for instance the Single Instruction, Multiple Data, abbreviated by SIMD, approach. A much simpler decoder for jointly decoding several encoded streams is thereby obtained since the same encoding structure is shared by all streams and the prediction construction can be efficiently implemented in a joint parallel process.

As all views will be encoded from a common encoding structure IREF, the resulting interdependencies between the encoded views remain simple, as shown in Fig. 2b (III).

Several embodiments of such joint encoders and decoders adapted to decode encoded video stream which were encoded by these joint encoders will now be described.

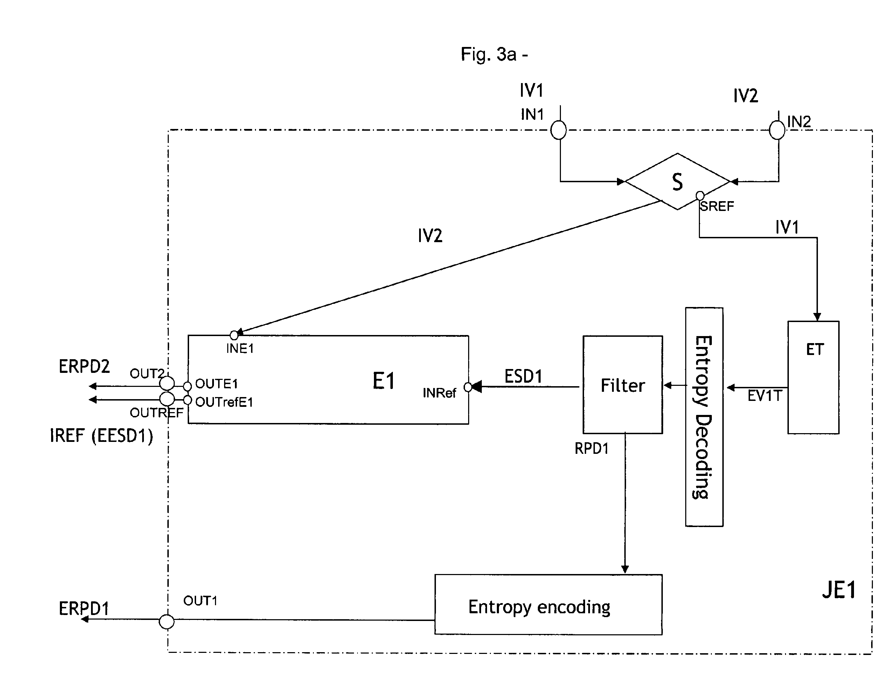

A first embodiment of a joint encoder JE1, depicted in Figure 3a, is adapted to receive two input video streams, denoted IV1 and IV2 on respective input terminals IN1 and IN2. The encoding structure data ESD is determined by first traditionally encoding one of both video streams, which is selected as an intermediate reference stream. This selection takes place in a selection module denoted S. This selection can be done in several ways. For example, one of the input streams can be randomly selected as the intermediate stream. Alternatively an input stream can be selected according to some specific criteria or in a heuristic way. These criteria can be based on the computation of an average pixel value stream from all the input streams such that the input stream which best approximates this average stream can be selected as the intermediate stream. This selection/approximation can again be based on some metric using e.g. PSNR or SSIM values. In the case of input streams corresponding to a multiview video capture of a scene, the stream that best corresponds with the most central view e.g. the middle view if the cameras were linearly aligned, can be selected as intermediate stream. In the case of input streams which were obtained by applying a slightly different image filtering using several values of a control parameter with respect to each other, the stream corresponding to the median control parameter value, or to the control parameter value which lies the closest to the average of all control parameter values used to create the input streams can be selected. Such a filtering can comprise e.g. applying different values for color alteration, illumination, contrast, blurring..., in which cases the varying control parameter thus refers to this color alteration, or illumination or contrast. Calculating the average values of this control parameter and then selecting the stream which best corresponds to this average value, will then result in the intermediate stream.

Alternatively, the input video for which the obtained encoding structure offers the best average rate-distortion performance for the overall compression of the input streams, can also be selected to become the reference stream.

A person skilled in the art is adapted to generate detailed embodiments for realizing the aforementioned selection procedures. Therefore detailed embodiments of such selection modules S such as the one depicted in fig. 3a will not be further described into detail.

In the joint encoder embodiment JE1 depicted in Fig. 3a the first video stream is selected as intermediate stream, and is provided on the SREF output terminal of the selection module S in Fig. 3a. This intermediate stream will then be traditionally encoded by means of a traditional encoder ET such as e.g. the one depicted in Fig. 1a. The encoded stream, denoted EV1T, is further provided to an entropy decoder for entropy decoding of the encoded data, so that a filter can subsequently parse or analyze and extract all the syntax elements which pertain to the coding structure itself. This allows to separate the encoding structure data ESD1 from the residual pixel data RPD1. The analysis is generally part of the filter operation itself, but can also be performed by some dedicated module. The result of this filtering operation is the encoding structure data or stream ESD1 on one hand, and the residual pixel data, denoted RPD1, on the other hand. ESD1 can then be used as input reference data for embodiments of encoder modules such as the depicted module E1, and which show strong similarities with the encoders being the subject of the co-pending patent application by the same Applicant and Inventor and denoted " method and arrangement for video coding".

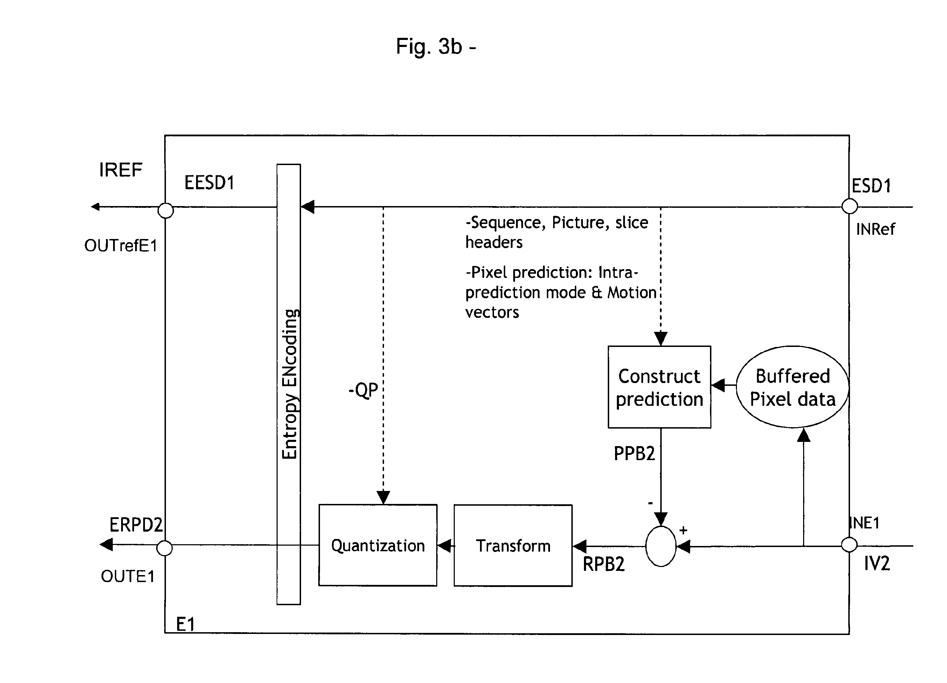

An embodiment E1 of this encoder module is shown in fig. 3b. This embodiment includes a first input terminal INE1 for receiving an input video stream, which can thus be a real stream, but also a stored file as previously explained. In the embodiments of Fig. 3a-b this input video is IV2. This embodiment E1 is further adapted to construct a sequence of predicted pixel blocks, denoted PPB2, and to generate a sequence of residual pixel blocks, denoted RPB2, from the predicted pixel blocks and from corresponding blocks of the incoming video stream IV2. A difference with the prior art encoder is that this embodiment E1 now comprises an additional input terminal, denoted INRef, for receiving reference data comprising encoding structure data such as ESD1 which was provided by the filter. This input encoding structure data ESD1 is now used for the construction of the predicted pixel blocks of IV2. This results in a much lower complexity of E1 compared to that of the previously described prior art encoder ET of Fig. 1 a. As an encoding structure is taken as an additional input based upon which the predicted pixel blocks are constructed, no detailed analysis of the video sequence as performed in the prior art "make encoding decisions" block is needed any more. The complexity of the encoding process performed by E1 is thereby significantly reduced.

The residual pixel blocks RPB2 further undergo a transformation, quantization and entropy encoding, in the embodiment of Fig. 3b performed in similar named modules, as in the prior art encoders, to obtain encoded residual pixel data denoted ERPD2. However in other embodiments all processing can take place in one single processor, such that there is no clear distinction between the different modules.

The encoded residual pixel data ERPD2 is provided as output data on a first output terminal OUTE1 of the module E1 of Fig. 3b. In this embodiment the encoding structure data ESD1 is further entropy encoded , such as to provide an encoded encoding structure EESD1 at a reference output terminal OUTrefE1.

Referring back to Fig. 3a, the residual pixel data RPD1, as provided by the filter, is entropy encoded again in a same named module. The encoded residual pixel data ERPD1 are provided at a first output terminal OUT1 of the joint encoder JE1. The encoded residual pixel data ERPD2 of the second input video IV2 and provided by E1 is further provided on a second output terminal OUT2 of this joint encoder JE1. The encoded encoding structure data EESD1 is provided as reference data IREF on a reference output terminal OUTREF of this joint encoder JE1.

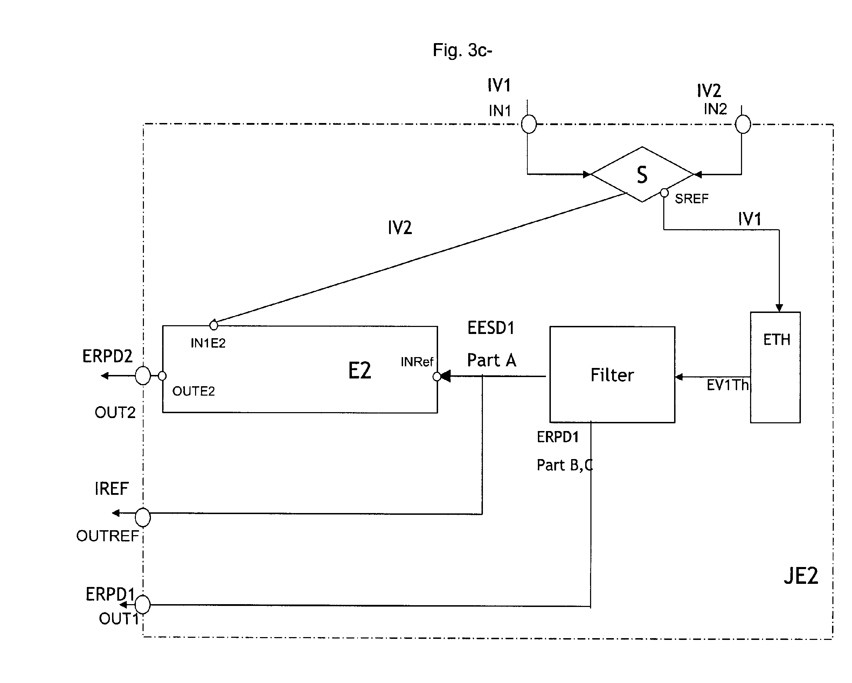

Another alternative embodiment JE2 is depicted in Fig. 3c. In this embodiment the first input video stream is again selected by the selection module S as intermediate stream which is to be traditionally encoded. Traditional encoding is now according to the H.264 standard with NAL unit partitioning, meaning that the encoded contents of one slice will be distributed over 3 NAL units: a NAL unit partition A, a NAL unit partition B, and a NAL unit partition C. According to the standard, the NAL unit partition A will contain Category 2 syntax elements of that slice, representing all slice-related syntax elements that are not residual data, thus relating to the encoding structure data. These category 2 syntax elements comprise slice header and header data for each macro block within a slice, including intra-prediction mode, resp. motion vectors, for intra-coded, resp. inter-coded, macroblocks, etc. The NAL unit partition B will contain the Category 3 syntax elements, that is the intracoded residual data of the macroblocks of the slice under consideration, if intra prediction coding was used, and the NAL unit partition C will contain the Category 4 syntax elements, that is the intercoded residual data, if this type of coding was used. This traditional encoder is denoted ETH and the encoded intermediate stream is denoted EV1 Hh. As this contains the partitioning into NAL units, a filter can easily separate the NAL units partition A, comprising the encoded encoding structure data EESD1, from the other partitions B and C, comprising the encoded residual data ERPD1. Both partitions can be readily provided as encoded residual pixel data ERPD1 at a first output terminal OUT1 of the joint encoder JE2.

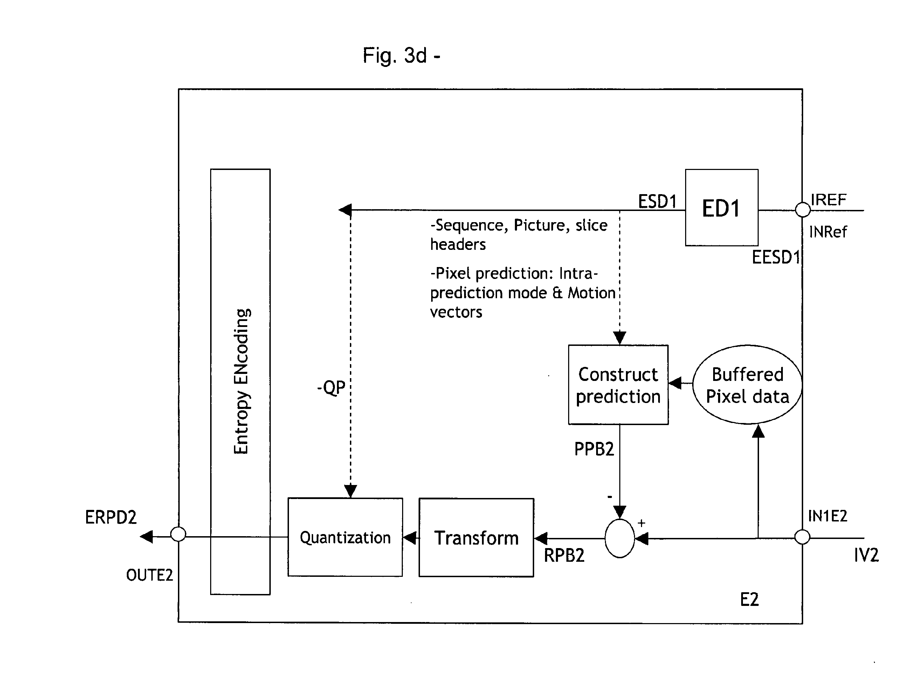

EESD1 will serve as input data to another single video encoder module E2, which is further adapted to determine the residual pixel data of EV2, using EESD1 as a reference input. An embodiment of this module E2 is shown into more details in Fig. 3d. This embodiment only differs from E1 shown in Fig. 3b in that it is adapted to receive encoded encoding structure data, as reference data IREF, instead of non-encoded structure data. Therefore E2 further comprises an entropy decoder ED1 adapted to determine the non-encoded encoding structure data ESD1 from EESD1. This encoding structure data will be used, in a way that is similar to what the encoder E1 performs, for determining the residual pixel data RPD2 for IV2. These are further processed and entropy encoded to result in the encoded residual pixel data ERPD2 for provision to an output terminal OUTE2. As the joint encoder JE2 already provided EESD1 as reference data IREF on an output reference terminal OUTREF, there is no need in E2 for entropy encoding ESD1 again. However variant joint encoders can include such a variant of E2 wherein ESD is entropy encoded again for being provided to an output terminal of JE2.

Such joint encoders are thus particularly useful e.g. for Compression of stereo- or multiview-video. For applications using e.g. stereoscopy-based 3D video or free viewpoint video, one typically has to capture several views of the same object or scene. For instance, in stereoscopy, the two videos are typically very close to each other. When capturing multiple video streams spanning a wide range of viewpoints, the various streams can typically be grouped in clusters of streams with viewpoints close to each other. To store or transmit 2 or more video streams with close viewpoints, the prior art method will independently compress and store/transmit the various views. In this prior art case, the complexity and the storage/transmission cost will scale linearly with the number of views to encode. This joint encoders JE1 and JE2 offer the alternative to first encode only one of the video streams and re-use the encoding structure which in the case of encoding using e.g. H.264 standard encoding methods with NAL unit partitioning as in JE2, relates to the Partition A of the obtained stream to efficiently encode the other similar video streams. This drastically reduces the encoding complexity for the latter streams and allows all streams to share the same Partition A on the storage/transmission medium, if this coding standard is used in the traditional encoder.

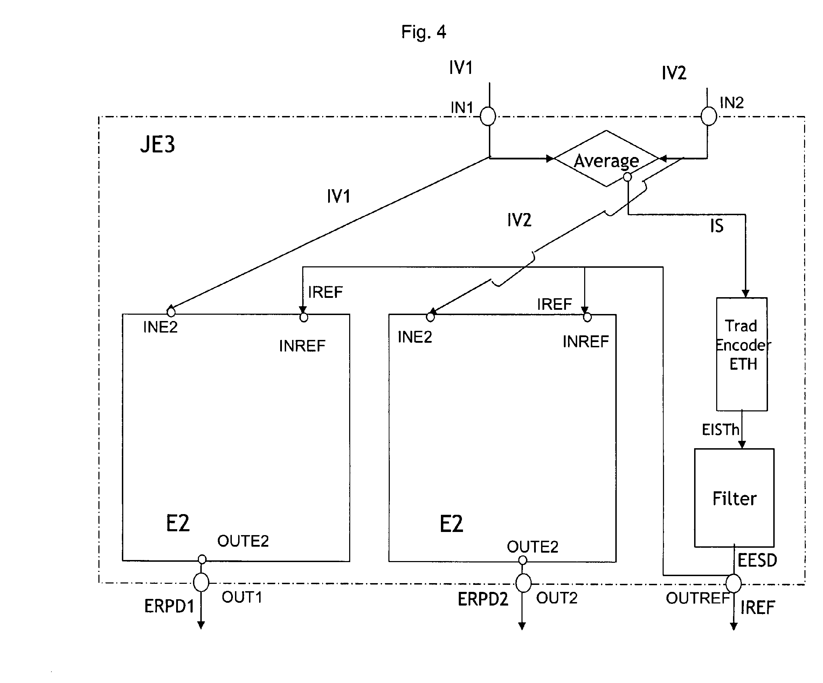

In a third embodiment JE3 of a joint encoder, shown in Fig. 4 , the common encoding structure data EESD is created from an intermediate stream denoted IS, obtained from all or some input streams. This can again be done in several ways. For instance, by averaging all the pixel values of all the input streams, or by only averaging the streams that fulfills certain criteria depending on the application, or yet by other manipulations on the pixel data of the streams which optimize the rate-distortion performance for the overall compression of the input streams.

In this embodiment JE3 this intermediate stream IS, is created by averaging the input streams at the pixel level, upon which step again traditional encoding such as e.g. the standard H.264 encoding is applied on this intermediate stream. The traditional encoder is again denoted ETH. The resulting encoded intermediate stream is denoted EISTh. This encoded stream can then be filtered again for filtering the partition A, as only this one is further needed during the encoding of the input video streams IV1 and IV2. The partition A, comprising the encoding structure data EESD is then provided as reference data IREF on a reference output terminal OUTREF of the joint encoder JE3, and is also further used in two single encoder modules E2 comprised within JE3. The operation of these single encoder modules E2 was described in an earlier paragraph with reference to fig. 3d.

The leftmost encoder module E2 in Fig. 4 thus receives IV1 and EEDS and is adapted to generate therefrom the encoded residual pixel data ERPD1 for IV1. The rightmost encoder module E2 is adapted to receive IV2 and EESD , and is adapted to generate therefrom the encoded residual pixel data ERPD2 for IV2. ERPD1, ERPD2 and EESD are provided on respective output terminals OUT1, OUT2 and OUTREF of JE3.

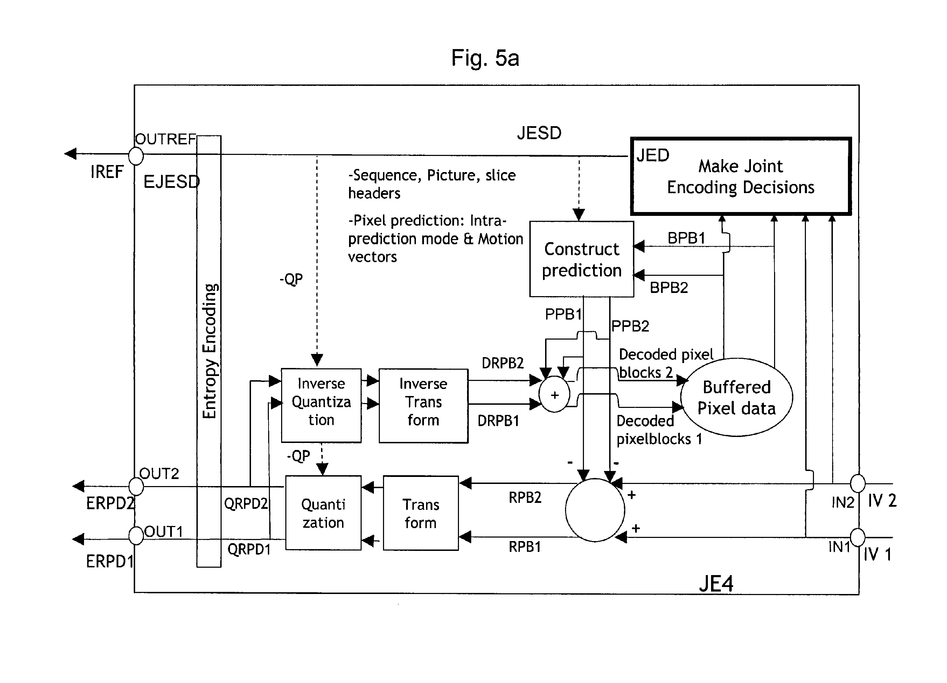

In yet another embodiment of a joint encoder JE4, being depicted in Figure 5a, the encoding structure data is determined from both input streams IV1 and IV2 by applying an encoding algorithm jointly to all input streams. The architecture of this joint encoder JE4 shows some similarities with the state-of-the-art encoder ET of Fig. 1a, but the main difference lies in the "Make Encoding Decision" block JED which now is adapted to jointly processes the multiple input video streams as well as the buffered pixel data of all streams, such as to output a single Joint Encoding Structure Data stream JESD. However other embodiments are possible where this single Joint Encoding Structure Data Stream is derived from only two or more of the input video streams, without taking the buffered pixel data further into account.

This joint encoding structure is then further used within the joint encoder JE4 to construct the sequence of predicted pixel blocks PPB1 and PPB2 respectively for IV1 and IV2. Respective sequences of residual pixel blocks RPB1 and RPB2 will be generated from the difference between these respective sequences of predicted pixels blocks PPB1 and PPB2 and corresponding blocks from the respective input video streams IV2 and IV1. These respective sequences of residual pixel blocks are then further processed such as e.g. being transformed and quantized to obtain respective sequences of quantized residual pixel data QRPD1 and QRPD2, which are subsequently entropy encoded such as to obtain respective sequences of encoded residual pixel data denoted ERPD1 and ERPD2 which are provided at respective output terminals OUT1 and OUT2 of this joint encoder JE4. The encoding structure data JESD will in this embodiment also undergo an entropy encoding step before being delivered as encoded encoding structure data EJESD, which is provided as reference data IREF on the reference output terminal OUTREF of this joint encoder JE4.

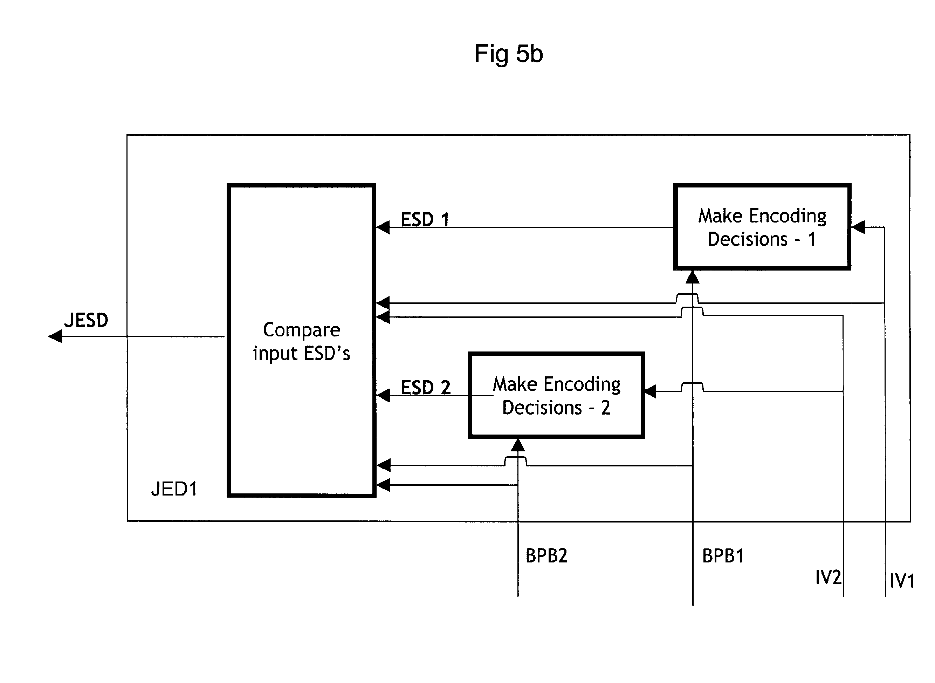

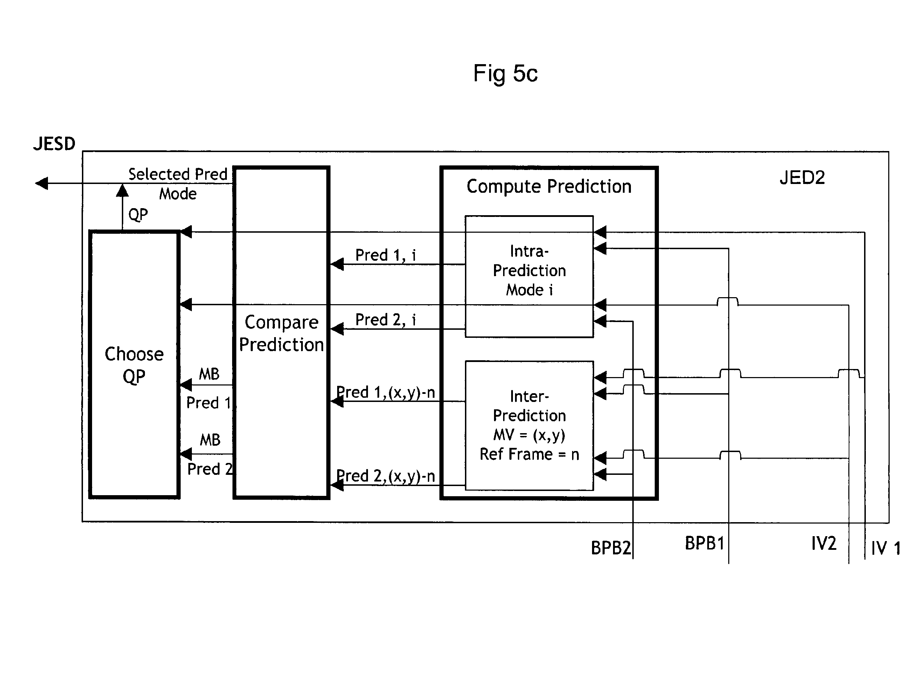

Two embodiments of such a "Make Joint Encoding Decisions " block JED will now be described with reference to Figs 5b and 5c. It is to be remarked that many others are possible.

A first embodiment JED1 shown in Figure 5b, comprises several known "single make encoding decisions" blocks , denoted "make encoding decisions 1" for IV1 and "made encoding decisions 2" for IV2. These are adapted to independently construct encoding structure data , denoted ESD1 and ESD2 from the respective input video streams IV1 and IV2 and respective buffered pixel data 1 and buffered pixel data 2. The obtained encoding structure data ESD1 and ESD2 are then compared for their joint encoding performance with respect to all input video streams IV1 and IV2. This comparison can be performed at the level of granularity of a slice. However a person skilled in the art will be able to generalize this also other granularity levels such as at the macroblock or the frame levels.

A joint encoding data structure JESD can be calculated at the slice level by applying, for each independently computed encoding structure data ESD1 and ESD2, the corresponding prediction and residual quantization steps inherent in ESD1 and ESD2 on that particular slice for both input videos IV1 and IV2. Then the joint performance of this particular encoding structure data ESD1, resp. ESD2 is evaluated by using some metric. This metric can e.g. be based on determining the rate-distortion quality. The encoding structure data which yields the best quality metric value with respect to this rate-distortion performance will then be selected to be the joint encoding structure data JESD. Such a quality metric value can for instance comprise measuring the sum over all input streams of the PSNR between the original slice and the slice coded with this particular ESD1 or ESD2. In this case the maximum metric value is sought by this comparison step. Alternatively the sum of the encoding size required for this particular ESD1, resp ESD2, can be determined together with the residual of all input videos obtained by using this particular encoding structure. In this case the ESD yielding the minimum value for this metric will be selected.

In a second embodiment JED2 shown in Figure 5c, the input video streams IV1 and IV2 are jointly analyzed for generating a single joint encoding structure data stream. For each macroblock, a coding decision such as a choice of the prediction mode for each macroblock, being intra or inter prediction, as well as a corresponding determination of intra-coding mode in case of intra prediction and motion vectors in case of inter prediction are made. This coding decision is made with the aim to jointly optimize the rate-distortion performance of all coded output streams of the encoder, thus of EJESD, ERPD2 and ERPD1. This optimization can be done by e.g. maximizing the decoded image quality of all output streams of the encoder under a given bitrate budget. Alternatively the bitrate needed to ensure a required image quality for all streams may be minimized . As an example, a procedure to jointly process a given macroblock in a P slice for all input videos will now be described. For each macroblock of each input video stream IV1 and IV2, and the corresponding blocks from the buffer of already coded pixel values that can be used as reference, either a set of predicted blocks using intra-prediction and the possible intra-coding modes (indexed by i in Figure 5c) are calculated, or, in case of inter-prediction , a set of possible pairs of motion vectors (x,y) and reference frame (n) are calculated. The set of possible prediction choices for input video IV1 are denoted by Pred1, i with i indexing an intra-coding mode, and Pred1,(x,.y)-n, with x, y denoting a two-dimensional motion vector and n denoting the number of the reference frame which is used for determining this motion vector. Similarly, for input video 2, the set of possible prediction choices are denoted Pred2, i with i indexing an intra-coding mode and with Pred2,(x,y)-n . All these prediction modes are then compared using a joint metric on all input streams. A single prediction mode will be selected based on this comparison, and this selected prediction, denoted Selected Pred Mode in Fig. 5c, will become part of the joint encoding structure data JESD for that macroblock. The corresponding predicted blocks for this particular macroblock, denoted MBpred1 and MBpred 2 respectively for each input video stream are then further processed, possibly together with corresponding blocks of the input streams JV1 and JV2, in order to determine a quantization parameter QP to be included in the thus obtained joint encoding structure data stream JESD.

As with respect to the other embodiment JED1, again many possibilities exist in order to define the metric to be applied for comparison of the prediction as being perfomed by the compare prediction module. It is for instance possible to aim at minimizing the total energy of all residuals. This total energy may be calculated as the sum, over all input videos, of the sum, over all pixel of the blocks, of squared difference between original and predicted pixel values.

The selection of the quantization parameter QP itself can, for instance, be based on a fixed choice or can be chosen so that the total size of the coded macroblocks fits a given size (in bits) budget.

It is to be remarked that, in this embodiment JED2, the selection of the prediction mode and the choice of the quantization parameter QP was decoupled. As in state-of-the-art encoders, the person skilled in the art will be able to generalize the approach as to select both the prediction mode and the quantization parameter QP based on a feedback of the encoding loop (which can include entropy coding), where the parameters are chosen e.g. so as to maximize the total quality (over all input video streams) of the coded macroblock under a total bit budget, or to maximize the compression by e.g. minimize the total size of the encoded MB for all input video streams under a required minimal quality.

In addition, the principles described in the previous paragraph can also be improved for optimizing the quantization parameter QP choices. This may involve using state-of-the-art techniques such Lagrangian Optimization which allow to optimize the QP macroblock value so as to optimize a global rate-distortion performance (at a slice, frame or sequence level).

Most of the shown embodiments JE1 to JE4 thus take advantage of the fact that the encoding structure of a encoded stream (potentially packaged in Partition A if data partitioning is used) contains all the important coding decisions made by the encoder: intra and inter-prediction mode, picture buffer management, motion vectors, .... Once this encoding structure is fixed, the encoding process of the residual data such as Partition B and C if data partitioning is used, merely consists of applying the chosen prediction mode, computing the residual data, applying the integer block transform and quantization and finally entropy coding of the obtained results. In the simplest form, the encoding of N input streams thus results in an output consisting of a common partition A and of N (unshared) partitions, each corresponding to one of the input streams. One given coded stream can be extracted from the N+1 1 created partitions by assembling its dedicated partition with the common partition. A decoder can then process those two partitions to display the required view.

Because the preferred use cases of this invention apply to input streams with strong similarities, a unique encoding structure may contain efficient coding decision for all the input streams. Therefore, for joint encoding of several input raw video streams, providing a shared partition made of a unique encoding structure to be used for all streams and a dedicated partition per individual stream made of their coded residual data provides a simple, yet very effective method.

For embodiments based on the selection or the creation of an intermediate stream, yet other embodiments of encoders according to the invention may combine one of the previously described embodiments with state-of-the-art encoding mechanisms as described with reference to Fig 1 a. As an example, such an embodiment can be adapted to, for each slice of each input stream to be encoded using the encoding structure of the intermediate stream, first compute the residual data of that slice according to the method explained with reference to e.g. Fig 3c, and, after addition with the predicted pixel blocks of that slice, compare the obtained decoded slice computed by the feedback steps with the same slice in the input video. If the quality of the decoded slice with respect to the original slice and measured e.g. using Peak Signal-to-Noise Ratio, abbreviated by PSNR, is below a certain threshold, then the original slice can be redirected to a state-of-the-art encoder such as the one of Fig 1 a in order to compute a new encoding structure yielding a coded slice of better quality. In this case, the computed encoding structure for that slice consists is to be added to the encoded stream related to the corresponding input stream. Similarly, during the decoding process, the encoded structure computed for that slice needs to be used in stead of the common encoding structure.

The slicing of the video picture itself can also be chosen during the encoding process so as to group macroblocks in FMO slices in function of their similarities across the multiple input video stream. Slices of macroblocks being very similar across the views are then encoded using a common encoding structure, while slices of macroblocks having more difference across the different input videos are encoded independently using a state-of-the-art encoding process that outputs a dedicated encoding structure related to that FMO slice for each video input.

It may further be noticed that this switching decision between a state-of-the-art encoder and an encoder as shown in the previous embodiments, can also be made at a coarser granularity e.g. at the frame level, or at the sequence level.

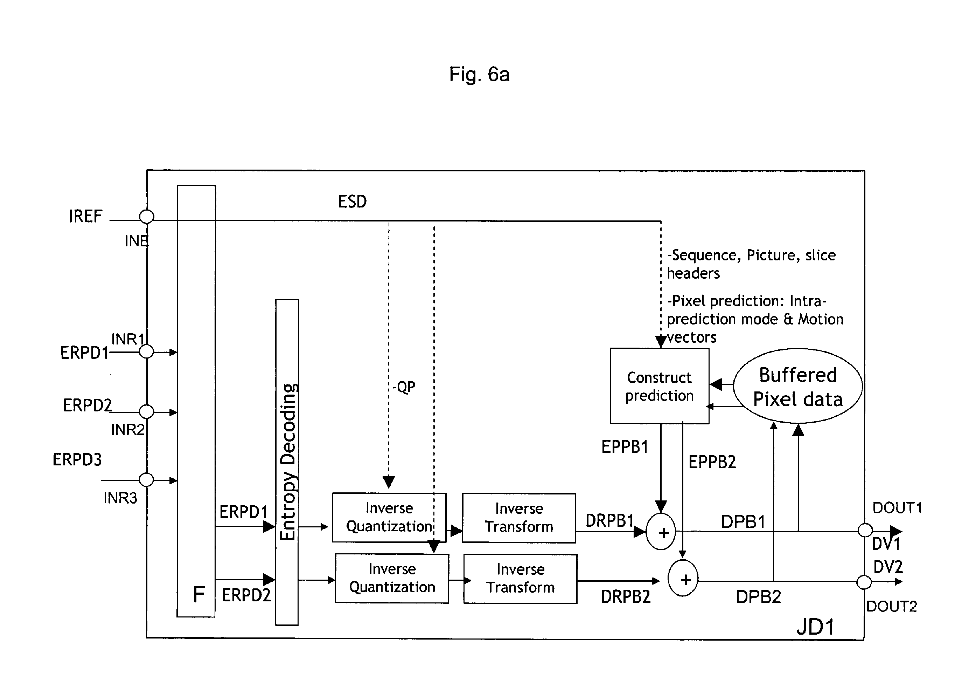

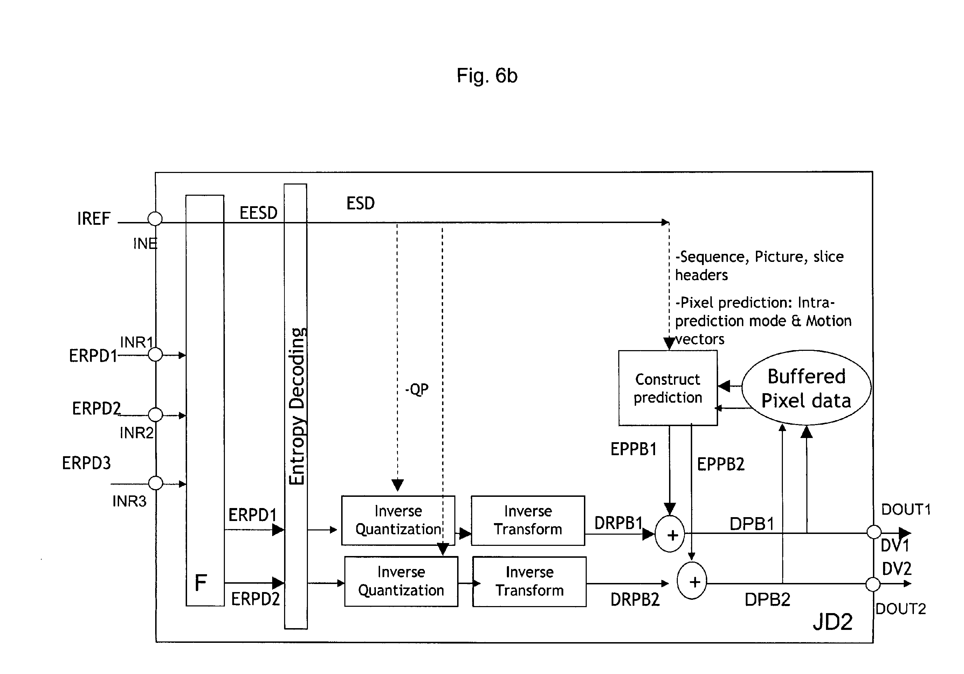

Two embodiments of a decoder for co-operating with the aforementioned joint encoders will now be described with reference to Fig. 6a and 6b.

Decoder JD1 of Fig. 6a is adapted to receive a plurality of sequences of encoded residual pixel data, which are denoted ERPD1, ERPD2, and ERPD3 on respective input terminals INR1, lNR2 and INR3. This embodiment further includes a reference input terminal INE for receiving reference input data IREF comprising input encoding structure data ESD. This decoder is further adapted to select one or more sequences of encoded residual pixel data pertaining to the encoded video stream this decoder has to decode, together with the reference encoding structure data IREF comprising ESD. In the embodiment of Fig 6a, decoder JD1 has to only decode encoded video streams EV1 and EV2 (which are not shown on this figure), so this decoder is adapted to extract or filter from all arriving data the reference encoding structure data ESD and encoded residual pixel data ERPD1 and ERPD2. This filtering or extraction operation is being performed by a filtering module F in Fig. 6a, but other embodiments are possible as well.

In the embodiment of Fig. 6a the reference input data IREF comprises the encoding structure data ESD in non-encoded form, so this decoder does not have to perform additional processing steps on IREF such as to extract therefrom the encoding structure data ESD. JD1 is further adapted to entropy decode the residual pixel data ERPD1 and ERPD2 and to process said at least one sequence of encoded residual pixel data to thereby obtain at least one sequence decoded residual pixel blocks denoted DRPB1 and DRPB2 for encoded videos EV1 and EV2. Such a processing may comprise performing an inverse quantization step followed by an inverse block transform as shown in Fig. 6a, but other embodiments are also possible. Decoder JD1 is further adapted to construct respective predictions of pixel blocks EPPB1, resp EPPB2 from the encoding structure data ESD and from respective buffered pixel data. These respective predictions EDPB1, EDPB2 are combined with respective decoded residual pixel blocks DRPB1, DRPB2 to generate respective sequences of decoded pixel blocks. These are denoted DPB1 and DPB2 and they will be provided as the respective decoded video streams DV1 and DV2 on respective output terminals DOUT1 and DOUT2.

The embodiment JD2 depicted in Fig. 6b is similar to JD1 in Fig. 6a, with the difference that the reference data will be provided as encoded encoding structure data, which is further to be entropy decoded within the decoder JD2.

While the principles of the invention have been described above in connection with specific apparatus, it is to be clearly understood that this description is made only by way of example and not as a limitation on the scope of the invention, as defined in the appended claims.

## Claims

1. Method for jointly encoding a plurality of video streams (IV1, IV2, IV3), said method including the steps of
- receiving said plurality of video streams (IV1, IV2, IV3)
- constructing a plurality of sequences of predicted pixel blocks (PPB1,PPB2, PPB3),
- processing and entropy encoding said predicted pixel blocks (PPB1,PPB2, PPB3) of said plurality of sequences of predicted pixel blocks with corresponding blocks of said plurality of video streams (IV1, IV2,IV3) for generating a plurality of sequences of encoded residual pixel data (ERPD1, ERPD2, ERPD3),
wherein said plurality of sequences of predicted pixel blocks (PPB1, PPB2, PPB3) are constructed from encoding structure data (ESD, ESD1, JESD) generated from said plurality of video streams (IV1, IV2, IV3), and wherein said plurality of sequences of encoded residual pixel data (ERPD1, ERPD2, ERPD3) is provided together with reference data (IREF) comprising said encoding structure data (ESD, ESD1, JESD) as encoded data of said plurality of video streams.

2. Method according to claim 1 or 2 wherein said encoding structure data (ESD,JESD, ESD1) is further entropy encoded to provide encoded encoding structure data (EESD, EJESD, EESD1) as said reference data (IREF).

3. Method according to any of claims 1 to 2 wherein said encoding structure data (ESD, ESD1) is generated from an intermediate stream derived from at least one video stream from said plurality.

4. Method according to claim 3 wherein said intermediate stream is obtained by averaging at least two video streams of said plurality or by selecting one stream (IV1) of said plurality as said intermediate stream.

5. Method according to claim 1 wherein said encoding structure data (JESD) is generated from at least two video streams of said plurality by analyzing encoding decisions for said at least two video streams and selecting a single prediction choice for being comprised in said encoding structure data .

6. Method according to claim 5 wherein said analysis is based upon comparing said encoding decisions with respect to a predetermined optimization criterion.

7. Method for decoding at least one encoded video stream (EV1, EV2) comprising at least one sequence of encoded residual pixel data (ERPD1, ERPD2) and reference data (IREF) comprising input encoding structure data (ESD), said method including a step of receiving a plurality of sequences of encoded residual pixel data (ERPD1, ERPD2, ERPD3) and of said reference data (IREF) comprising input encoding structure data (ESD) , a step of selecting at least one sequence of encoded residual pixel data (ERPD1, ERPD2) pertaining to said at least one encoded video stream (EV1,EV2) and said reference data comprising said encoding structure data (ESD), to entropy decode and process said at least one sequence of encoded residual pixel data (ERPD1, ERPD2) pertaining to said at least one encoded video stream (EV1, EV2) with said encoding structure data (ESD) to provide at least one sequence of decoded pixel blocks (DPB1,DPB2) as at least one decoded video stream (DV1, DV2).

8. Method according to claim 7 wherein said at least one sequence of encoded residual pixel data pertaining to said at least one encoded video stream is submitted to an inverse quantization and an inverse transformation to thereby obtain at least one sequence of decoded residual pixel blocks (DRPB1, DRPB2) , wherein at least one prediction of pixel blocks (EPPB1, EPPB2) is constructed from said encoding structure data (ESD) and from buffered pixel blocks for combination with said at least one decoded residual pixel blocks (DRPB1, DRPB2) to thereby obtain said at least one sequence of decoded pixel blocks (DPB1,DPB2).

9. Encoder (JE, JE1,JE2, JE3, JE4 ) for encoding a plurality of video streams (IV1, IV2, IV3), said encoder being further adapted to receive said video streams (IV1, IV2, IV3), to generate a plurality of sequences of predicted pixel blocks (PPB1,PPB2, PPB3), to process and entropy encode said plurality of sequences of predicted pixel blocks and corresponding blocks of said video streams (IV1, IV2,IV3) for generating a plurality of sequences of encoded residual pixel data (ERPD1, ERPD2, ERPD3),
wherein said encoder (JE, JE1,JE2, JE3, JE4 ) is further adapted generate encoding structure data (ESD, ESD1, JESD) from said plurality of video streams, to construct said plurality of sequences of predicted pixel blocks (PPB1, PPB2, PPB3) from said encoding structure data (ESD, ESD1, JESD) and to provide said plurality of sequences of encoded residual pixel data (ERPD1, ERPD2, ERPD3) and reference data (IREF) comprising said encoding structure data (EESD) on respective output terminals (OUT1,OUT2, OUT3, OUTREF) as encoded data of said plurality of video streams.

10. Encoder (JE, JE1,JE2, JE3, JE4 ) according to claim 9 further being adapted to generate a plurality of sequences of residual pixel blocks (RPB1,RPB2, RPB3) from the difference between predicted pixel blocks (PPB1,PPB2, PPB3) of said plurality of sequences of predicted pixel blocs and corresponding blocks of said plurality of video streams (IV1, IV2,IV3), to transform , quantize and entropy encode said residual pixel blocks (RPB1, RPB2, RPB3) of said respective sequences to thereby obtain said plurality of sequences of encoded residual pixel data (ERPD1, ERPD2, ERPD3).

11. Encoder (JE, JE1,JE2, JE3, JE4 ) according to claim 10 further being adapted to entropy encode said encoding structure data (ESD) such as to provide said reference data as encoded encoding structure data (EESD) .

12. Encoder (JE, JE1,JE2, JE3) according to claim 10 or 11 further being adapted to generate said encoding structure data (ESD) from an intermediate stream derived from at least one video stream (IV1, IV2) of said plurality.

13. Encoder (JE, JE3) according to claim 11 further being adapted to generate said intermediate stream by averaging at least two video streams (IV1, IV2) of said plurality or by selecting one stream (IV1) of said plurality as said intermediate stream .

14. Encoder (JE, JE4) according to claim 9 wherein said encoding structure data is generated from at least two video streams of said plurality by analyzing encoding decisions for said at least two video streams and selecting a single prediction choice for being comprised in said encoding structure data.

15. Decoder ( JD, JD1, JD2) for decoding at least one encoded video stream comprising at least on sequence of encoded residual pixel data (ERPD1, ERPD2) and reference data comprising input encoding structure data (ESD), said decoder being adapted to receive a plurality of sequences of encoded residual pixel data (ERPD1, ERPD2, ERPD3) and reference input data (IREF) comprising input encoding structure data (ESD), said decoder further being adapted to select at least one sequence of encoded residual pixel data (ERPD1, ERPD2) pertaining to said at least one encoded video stream (EV1,EV2) and to derive said encoding structure data (ESD) from said reference input data (IREF), to entropy decode and to process said at least one sequence of encoded residual pixel data (ERPD1, ERPD2) together with said encoding structure data to provide at least one sequence of decoded pixel blocks (DPB1,DPB2) as said at least one decoded video stream (DV1, DV2).

16. Decoder according to claim 15 further being adapted to perform an inverse quantization and an inverse transformation on said at least one sequence of encoded residual pixel data pertaining to said at least one encoded video stream to thereby obtain at least one sequence of decoded residual pixel blocks (DRPB1, DRPB2) , wherein at least one prediction of pixel blocks (EPPB1, EPPB2) is constructed from said encoding structure data (ESD) and from buffered pixel blocks for combination with said at least one decoded residual pixel blocks (DRPB1, DRPB2) to thereby obtain said at least one sequence of decoded pixel blocks (DPB1,DPB2).

17. Decoder (JD2) according to claim 15 or 16 further being adapted to derive said encoding structure data (ESD) by entropy decoding encoded encoding structure data (EESD) extracted from said reference input data (IREF)
